# EUROPEAN PATENT APPLICATION

(11) **EP 2 139 276 A2**
(43) Date of publication of application: **30.12.2009**
(21) Application number: 09162488.2
(22) Date of filing: 11.06.2009
(51) Int. Cl.: H04W 24/06

(54) **Self-test method for a vehicular telematics unit**

(30) Priority: 27.06.2008 US 215473
(71) Applicant: Delphi Technologies, Inc., Troy, Michigan 48007 (US)
(72) Inventor: Kennelly, Thomas J., Kokomo, IN 46902 (US)
(74) Representative: Denton, Michael John

(57) **Abstract**

A self-test methodology verifies the satisfactory operation of an installed vehicular telematics unit (12) using a signal processor (22) of the telematics unit (12). The test can be initiated at any time by a vehicle occupant or a remote call center (24). When testing is initiated, the telematics unit (12) places a cellular call to the call center (24) or a phone simulator (30), which generates a test tone that is reproduced in the vehicle cabin through the audio output (46) and loudspeaker (18) of the telematics unit (12). The telematics unit (12) uses its microphone input (20/48) to sample the reproduced tone (38), and a signal processor (22) within the telematics unit (12) analyzes the sampled tone by performing a SINAD or equivalent calculation (40). The test evaluates the sound quality of the telematics unit (12) and verifies operability of the antenna, phone, audio and microphone components (16, 14, 18, 20).

## Description

### TECHNICAL FIELD

The present invention relates to a testing methodology for verifying the operability of a vehicular telematics unit, and more particularly to a self-test methodology.

### BACKGROUND OF THE INVENTION

Vehicular telematics units (a General Motors OnStar unit, for example) establish a cellular or satellite communication link between the host vehicle and a remote call center to provide various security, diagnostic and remote control features. For quality control purposes, factory testing is carried out to verify that the telematics unit operates satisfactorily, produces a sufficiently high quality audio output, and records audio without distortion. For example, a technician can manually activate the telematics unit, and listen to the audio output, or electronically analyze the quality of the audio output with an instrument that provides a SINAD (signal-to-noise and distortion) or other signal quality measurement. In general, using a SINAD or similar measurement is preferred because it provides a more objective evaluation of the quality, frequency and level of the audio output.

While the above-described test procedure can adequately test a vehicular telematics unit, it involves significant expense to the installer or vehicle manufacturer due to the labor and equipment costs. Also, the testing is only performed at the factory, and cannot realistically be used to verify the operation of an uninstalled telematics unit once it leaves the factory, or to verify the continued operability of an installed telematics unit after the vehicle leaves the factory. Accordingly, what is desired is an improved testing methodology that is more cost effective, more versatile, and that allows periodic testing of an installed telematics unit.

### SUMMARY OF THE INVENTION

The present invention is directed to an improved self-test methodology for verifying satisfactory operability of a vehicular telematics unit, where the test methodology is carried out by the telematics unit using its own signal processing capability. The testing can be initiated at any time by a vehicle occupant or a remote communication device. When testing is initiated, the telematics unit places a cellular or satellite call to a remote call center or a phone simulator, which generates a test tone that is reproduced in the vehicle cabin through the audio output and loudspeaker of the telematics unit. The telematics unit uses its microphone input to sample the reproduced tone, and a signal processor within the telematics unit analyzes the sampled tone by performing a SINAD or equivalent calculation. The test evaluates the sound quality of the telematics unit and verifies operability of its cellular antenna, audio and microphone components. The test can also be performed prior to installation by electrically passing the audio output to the audio input of the telematics unit.

### BRIEF DESCRIPTION OF THE DRAWINGS

FIG. 1 is a diagram of a telematics unit installed in a vehicle and a self-test method for the installed telematics unit.

FIG. 2 is a flow diagram of the self-test method for the installed telematics unit of FIG. 1.

FIG. 3 is a diagram of an uninstalled telematics unit and a self-test method for the uninstalled telematics unit.

### DESCRIPTION OF THE PREFERRED EMBODIMENT

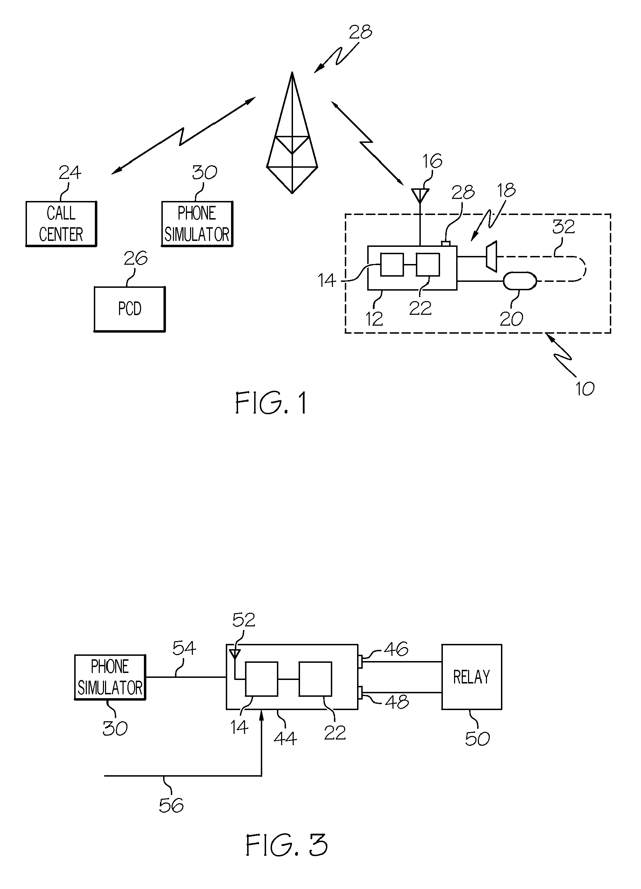

Referring to FIG. 1, the reference numeral 10 generally designates a vehicle equipped with a telematics unit 12, such as a General Motors OnStar unit. Telematics unit 12 includes a cellular phone module 14, an antenna 16, an audio output and loudspeaker 18, a microphone 20, and a microprocessor-based controller 22. Controller 22 is programmed to control the operation of phone module 14, to perform signal-processing tasks such as voice recognition, and to communicate with other vehicle controllers such as a body computer (not shown). In general, telematics unit 12 communicates with a remote call center 24 and/or a personal communication device (PCD) 26 via a cellular communication network 28, and provides a host of security, diagnostic and remote control features. For example, the call center 24 can initiate a cellular communication with telematics unit 12 to command a vehicle control function such as door locking or unlocking; the telematics unit 12 can initiate a cellular communication to the call center 24 or personal communication device 26 in response to a specified vehicle event such as a crash or an unauthorized entry; an authorized user can initiate a cellular communication to telematics unit 12 from personal communication device 26 or a land-line telephone to obtain vehicle diagnostic or status information; and so forth. Of course, beneficial enjoyment of these features requires satisfactory operation of telematics unit 12, and the present invention is directed to a self-test method whereby the controller 22 is programmed to carry out a test procedure for determining whether the telematics unit 12 and associated hardware elements are operating satisfactorily.

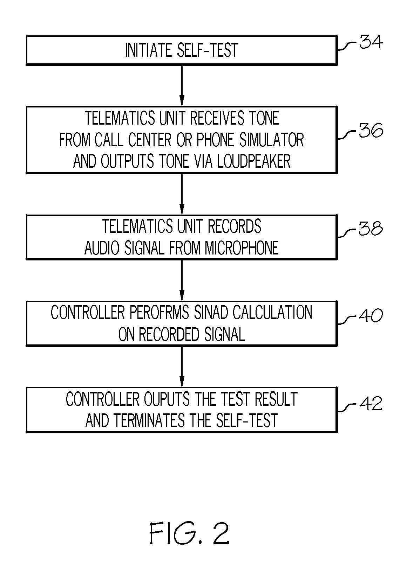

The flow diagram of FIG. 2 outlines the self test method of this invention for the case of telematics unit 12 that has been installed in a vehicle 10 as illustrated in FIG. 1. Referring to FIG. 2, block 34 signifies the step of signaling the telematics unit 12 to initiate a self-test procedure. This step can be perfomed by an occupant of the vehicle 10 by momentarily depressing a self-test button 28 on telematics unit 12, for example. Alternately, the step can be performed remotely by the call center 24 or the personal communication device 26. Once the self-test procedure has been initated, the telematics unit 12 receives a test tone such as a standard single frequency test tone or a dual tone multi-frequency (DTMF) signal, and outputs the tone via the audio output and loudspeaker 18, as indicated at block 36. Preferably, telematics unit 12 obtains the test tone by placing a cellular call to the call center 24 or a phone simulator 30, but it is also possible to use a test tone stored in a memory of the controller 22. While the tone is being audibly generated, the processor 22 samples the audio signal produced by the microphone 20, as designated by block 38 in FIG. 2 and schematically represented by the audio loop 32 in FIG. 1. Then the controller 22 of telematics unit 12 analyzes the recorded audio signal for sound quality and fidelity as indicated at block 40. For example, the signal processing hardware of controller 22 can be programmed to perform a SINAD calculation to evaluate the quality, frequency and level of the sampled audio signal. Finally, the controller 22 outputs the result of the analysis and terminates the self-test, as indicated at block 42. The output may be in the form of a pass/fail indication, a normalized measurement, or a graphical indication, for example, but in general, the output is provided to the person or device that initiated the self-test procedure. This permits an occupant or a remotely located person or call center to initiate the self-test procedure and obtain the result of the test to verify proper operation of telematics unit 12, including the phone module 14, antenna 16, the audio output and loudspeaker 18, the microphone 20, and the controller 22.

Referring to FIG. 3, the reference numeral 44 generally designates an uninstalled telematics unit, such as in a factory that manufactures the same. In most cases, the uninstalled telematics unit 44 will have audio output and input terminals 46 and 48, but will not include a loudspeaker or a microphone. In this case, a simple relay 50 is used to receive the audio output signal at terminal 46 and to route it back to the audio input terminal 48 once the self-test procedure has been initialized. The uninstalled telematics unit 44 can place a call to an infactory phone simulator 30 via an internal antenna 52 or via a cable 54 coupling the phone simulator 30 to an antenna input of telematics unit 44. And as mentioned above in reference to FIGS. 1-2, the test tone can be supplied to telematics unit 44 by the phone simulator 30 or can be stored in a memory of the internal processor 22. In any event, the test procedure is initiated by a factory test module (not shown) that communicates with telematics unit 44 via a serial communication bus 56. Advantageously, a plurality of uninstalled telematics units 44 can be batch-tested by placing the units in a fixture including a bank of relays 50, and having each such unit communicate with the same phone simulator 30 using a multiplexing arrangement, for example.

In summary, the self-test method of the present invention provides an improved and cost effective testing methodology that allows the operability of a telematics unit to be verified both prior to and after installation in a motor vehicle. When tested prior to installation, proper operation of the phone module 14, the audio output and input, and the controller 22 are verified; and when tested after installation in a vehicle 10, proper operation of the antenna 16, loudspeaker 18 and microphone 20 are additionally verified. The method also permits remote test initiation so that the call center 24 or an authorized person can verify that an installed telematics unit 12 is operating satisfactorily.

While the present invention has been described with respect to the illustrated embodiment, it is recognized that numerous modifications and variations in addition to those mentioned herein will occur to those skilled in the art. For example, telematics unit 12 may communicate over a satellite network instead of a cellular network, and so on. Accordingly, it is intended that the invention not be limited to the disclosed embodiment, but that it have the full scope permitted by the language of the following claims.

## Claims

1. A method of testing for satisfactory operation of a telematics unit (12/44), comprising the steps of:
placing a phone call from the telematics unit (12/44) to a remote call center (24) or phone simulator (30) via a communication network (28);
supplying a test tone (36) from the remote call center (24) or phone simulator (30) to the telematics unit (12/44) via the communication network (28);
reproducing the supplied test tone (36) via an audio output (18/46) of the telematics unit (12/44);
receiving the reproduced test tone (38) at an audio input (20/48) of the telematics unit (12/44);
conducting an analysis the received test tone (40) using a signal processor (22) of the telematics unit (12/44) to determine if the telematics unit (12/44) is operating satisfactorily; and
outputting a result of the analysis (42).

2. The method of claim 1, including the step of:
placing a phone call from the remote call center (24) to the telematics unit (12/44) via the communication network (28) to initiate the testing method (34).

3. The method of claim 2, including the step of:
outputting the result of the analysis (42) from the telematics unit (12/44) to the remote call center (24).

4. The method of claim 1, where:
the signal processor (22) of the telematics unit (12/44) performs a SINAD measurement of the received test tone (40) to determine if the telematics unit (12/44) is operating satisfactorily.

5. The method of claim 1, where:
the telematics unit (12/44) is installed in a vehicle (10), and the testing method is initiated (34) by an occupant of the vehicle (10).

6. The method of claim 5, including the step of:
outputting the result of the analysis (42) from the telematics unit (12/44) to the occupant.

7. The method of claim 1, where the telematics unit (12/44) is installed in a vehicle (10), and the method includes the steps of:
remotely initiating the testing method (34) by placing a call to the telematics unit (12/44) from a personal communication device (26); and
outputting the result of the analysis (40) from the telematics unit (12/44) to the personal communication device (26).

8. The method of claim 1, where the telematics unit (12/44) is installed in a vehicle (10), and the method includes the steps of:
reproducing the supplied test tone (36) in a cabin of the vehicle (10) via the audio output (46) of the telematics unit (12/44) and a loudspeaker (18) installed in the cabin of the vehicle (10); and
receiving the reproduced test tone (38) at the audio input (48) of the telematics unit (12/44) via a microphone (20) installed in the cabin of the vehicle (10).

9. The method of claim 1, where the telematics unit (12/44) is installed in a vehicle (10), and the method includes the steps of:
placing the phone call (36) from the telematics unit (12/44) to the remote call center (24) or phone simulator (30) via the communication network (28) and an antenna (16) of the vehicle (10).

10. The method of claim 1, including the steps of:
providing a relay (50) for the telematics unit (12/44); and
coupling an input of the relay (50) to the audio output (46) of the telematics unit (12/44), and an output of the relay (50) to the audio input (48) of the telematics unit (12/44).
